# EUROPÄISCHE PATENTANMELDUNG

(11) **EP 4 102 679 A1**
(43) Veröffentlichungstag der Anmeldung: **14.12.2022**
(21) Anmeldenummer: 22174626.6
(22) Anmeldetag: 20.05.2022
(51) Int. Cl.: H02J 7/00, H04R 25/00, G05B 13/02

(54) **VERFAHREN ZUM LADEN EINES ENERGIESPEICHERS,MOBILES GERÄT UND LADEGERÄT**

(30) Priorität: 11.06.2021 DE 102021205950
(71) Anmelder: Sivantos Pte. Ltd., Singapore 539775 (SG)
(72) Erfinder: KUKLA, Christoph, 92724 Trabitz (DE); ASCHOFF, Stefan, 90542 Eckental (DE)
(74) Vertreter: FDST Patentanwälte

(57) **Zusammenfassung**

Es wird ein Verfahren angegeben, zum Laden eines Energiespeichers (10) eines mobilen Geräts (2), insbesondere eines Hörgeräts, welches abwechselnd in Ladephasen (L, L*) ladbar und in Nutzungsphasen (N, N*) nutzbar ist, wobei für das Laden in einer bevorstehenden Ladephase (L*) eine voraussichtliche Dauer (D*) der bevorstehenden Ladephase (L*) sowie ein voraussichtlicher Energieverbrauch (E*) einer nachfolgenden Nutzungsphase (N*) basierend auf vorangegangenen Ladephasen (L) und vorangegangenen Nutzungsphasen (N) bestimmt werden, wobei basierend auf dem voraussichtlichen Energieverbrauch (E*) eine benötigte Ladung (C*) für den Energiespeicher (10) berechnet wird, wobei für die bevorstehende Ladephase (L*) ein Ladeschema (12) zum Laden des Energiespeichers (10) basierend auf der benötigten Ladung (C*) und der voraussichtlichen Dauer (D*) eingestellt wird. Weiter werden ein mobiles Gerät (2) und ein Ladegerät (8) angegeben.

## Beschreibung

Die Erfindung betrifft ein Verfahren zum Laden eines Energiespeichers eines mobilen Geräts, insbesondere eines Hörgeräts, sowie ein entsprechendes mobiles Gerät. Weiter betrifft die Erfindung ein Ladegerät.

Ein mobiles Gerät ist transportabel, verfügt über einen eigenen Energiespeicher zur Energieversorgung und ist regelmäßig einem einzelnen Nutzer zugeordnet und gegebenenfalls sogar individuell auf diesen abgestimmt. Der Energiespeicher ist regelmäßig eine Sekundärzelle (z.B. Lithium-Akku), welche durch Verbinden des mobilen Geräts mit einem Ladegerät aufladbar ist.

Ein spezielles Beispiel für ein mobiles Gerät ist ein Hörgerät, welches zur Versorgung eines Nutzers dient, welcher/welche ein Hördefizit aufweist. Hierzu weist das Hörgerät ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Modifikation erfolgt insbesondere anhand eines individuellen Audiogramms des Nutzers, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird. Anstelle des Mikrofons und des Hörers sind je nach Hörgerätetyp auch andere Eingangs-und/oder Ausgangswandler möglich.

Andere Beispiele für mobile Geräte sind Kopfhörer, Headsets, Wearables, Smartphones und ähnliche Geräte.

Problematisch ist, dass der Energiespeicher durch wiederholtes Laden und Entladen, d.h. mit zunehmender Anzahl an Lade-/Entladezyklen, verschleißt und an Leistungsfähigkeit einbüßt, speziell verringert sich die Kapazität des Energiespeichers fortlaufend. Der Energiespeicher weist somit eine begrenzte Lebensdauer auf, welche abhängig davon variiert, wie der Energiespeicher konkret geladen und entladen wird. Die Lebensdauer wird beispielsweise als Anzahl an Lade-/Entladezyklen angegeben, für welche der Energiespeicher eine bestimmte Mindestkapazität aufweist. Entsprechend ist es wünschenswert, die Nutzung des Energiespeichers hinsichtlich dessen Lebensdauer zu optimieren.

In Lu, Zhao, et al. "Experimental investigation on the charge-discharge performance of the commercial lithium-ion batteries." Energy Procedia 143 (2017): 21-26, wird eine Temperaturabhängigkeit der Kapazität eine Energiespeichers beschrieben.

Die EP 3 164 781 B1 beschreibt eine Ladevorrichtung, die konfiguriert ist, um mit mindestens einer aufladbaren Vorrichtung gekoppelt zu werden und um eine Ladesitzung der aufladbaren Vorrichtung durchzuführen, die in der Lage ist, während der Ladesitzung Echtzeitdaten zu speichern und mit einer ID der Ladevorrichtung an ein cloudbasiertes Datenspeicher- und Analysemodul zu übertragen. Durch Echtzeitdaten von Leistungen und Funktionsparametern wird ein Energieprofilverhalten erhalten.

In der DE 10 2019 218 616 A1 wird ein Verfahren zum Betrieb eines Hörsystems beschrieben, welches in einem Evaluierungsbetrieb eine Anzahl von Fragen an einen Nutzer ausgibt und eine Anzahl von Antworten des Nutzers darauf aufnimmt.

Zusätzlich wird noch verwiesen auf DE 10 2014 002 973 A1 und EP 2 672 731 A1.

Vor diesem Hintergrund ist es eine Aufgabe der Erfindung, das Laden eines Energiespeichers zu verbessern. Insbesondere soll das Laden derart optimiert werden, dass sich eine möglichst hohe Lebensdauer für den Energiespeicher ergibt, d.h. dass dieser möglichst viele Lade-/Entladezyklen durchlaufen kann. Die Optimierung soll möglichst derart erfolgen, dass der Nutzer möglichst wenig beeinträchtigt wird. Hierzu soll ein entsprechendes Verfahren angegeben werden, weiter sollen ein mobiles Gerät und ein Ladegerät angegeben werden, welche für das dem Verfahren geeignet sind.

Die Aufgabe wird erfindungsgemäß gelöst durch ein Verfahren mit den Merkmalen gemäß Anspruch 1, durch ein mobiles Gerät mit den Merkmalen gemäß Anspruch 12 sowie durch ein Ladegerät mit den Merkmalen gemäß Anspruch 13. Vorteilhafte Ausgestaltungen, Weiterbildungen und Varianten sind Gegenstand der Unteransprüche. Die Ausführungen im Zusammenhang mit dem Verfahren gelten sinngemäß auch für das mobile Gerät und das Ladegerät sowie umgekehrt. Sofern nachfolgend Schritte des Verfahrens angegeben sind, ergeben sich vorteilhafte Ausgestaltungen für das mobile Gerät und das Ladegerät jeweils dadurch, dass diese eine jeweilige Steuereinheit aufweist, welche ausgebildet ist, einen oder mehrere der Schritte auszuführen.

Ein Kerngedanke der Erfindung ist insbesondere, das Laden eines Energiespeichers eines mobilen Geräts in Kenntnis des vorangegangenen Nutzungs- und Ladeverhaltens des mobilen Geräts zu optimieren und hierzu basierend auf vorangegangenen Nutzungsphasen sowie vorangegangenen Ladephasen des mobilen Geräts ein Ladeschema für das Laden während einer bevorstehenden Ladephase optimal einzustellen. Mit anderen Worten: das Verfahren realisiert ein intelligentes, adaptives Lademanagement.

Das Verfahren dient zum Laden eines Energiespeichers eines mobilen Geräts. Das mobile Gerät ist bevorzugterweise ein Hörgerät, alternativ ein Kopfhörer, Headset, Wearable, Smartphone oder ähnliches Gerät. Das mobile Gerät ist transportabel, verfügt über einen eigenen Energiespeicher zur Energieversorgung und ist insbesondere einem einzelnen Nutzer zugeordnet. Der Energiespeicher ist durch Verbinden mit einem Ladegerät aufladbar. Der Energiespeicher ist beispielsweise ein Lithium-Akku. Das mobile Gerät wird nachfolgend vereinfachend auch einfach als "Gerät" bezeichnet, zudem wird nachfolgend ohne Beschränkung der Allgemeinheit von einem Hörgerät ausgegangen, die Ausführungen gelten jedoch sinngemäß auch für andere Geräte.

Das mobile Gerät ist abwechselnd in Ladephasen ladbar und in Nutzungsphasen nutzbar ist. Nutzungsphasen und Ladephasen schließen sich gegenseitig aus und wechseln einander ab. Eine jeweilige Nutzungsphase erstreckt sich somit vom Ende einer vorangehenden Ladephase bis zum Beginn einer nachfolgenden Ladephase, entsprechendes gilt für die Ladephasen.

Während einer jeweiligen Ladephase wird der Energiespeicher gemäß einem Ladeschema geladen. Das Ladeschema gibt für einen oder mehrere Ladeparameter, z.B. Ladestrom und Ladespannung, jeweils einen Wert oder eine Funktion vor. Das Ladeschema wird insbesondere vom Ladegerät umgesetzt, dient also zur Steuerung des Ladegeräts. Die Ladeparameter sind grundsätzlich einstellbar, sodass mit unterschiedlichen Werten und/oder Funktionen unterschiedliche Ladeschemata realisierbar sind. Das Laden erfolgt mittels eines Ladegeräts, an welches das mobile Gerät angeschlossen wird. Am Ende der Ladephase weist der Energiespeicher eine Ladung auf, welche der Gesamtkapazität des Energiespeichers entspricht (vollständig geladen, d.h. 100% Ladung) oder lediglich einem Teil davon (teilweise geladen, d.h. <100% Ladung, z.B. 80 % Ladung). Die Ladung am Ende der Ladephase ist typischerweise durch die Dauer der Ladephase begrenzt, d.h. dadurch, wieviel Zeit zum Laden zur Verfügung steht.

Während einer jeweiligen Nutzungsphase wird das mobile Gerät mit Energie aus dem Energiespeicher betrieben und weist dadurch einen Energieverbrauch auf. Während der jeweiligen Nutzungsphase wird das Gerät vom Nutzer durchgängig oder mit Unterbrechung genutzt, es muss also nicht zwingend Energie verbraucht werden, in jedem Fall wird der Energiespeicher während einer Nutzungsphase jedoch nicht geladen und ist auch nicht mit einem Ladegerät verbunden oder mit einem anderen Ladegerät insbesondere abseits des hier beschriebenen Ladegeräts. Der Energieverbrauch während einer jeweiligen Nutzungsphase ist von dem konkreten Nutzungsverhalten abhängig und variiert entsprechend.

Der Erfindung liegt nun die Beobachtung zugrunde, dass typischerweise der Energiespeicher so schnell wie möglich geladen wird, da die Dauer der Ladephase nicht bekannt ist. Zum besonders schnellen Laden wird dann ein Ladeschema mit einem möglichst hohen Ladestrom gewählt. Außerdem ist auch der Energieverbrauch der nachfolgenden Nutzungsphase regelmäßig nicht bekannt, weshalb der Energiespeicher so vollständig wie möglich geladen wird. Sowohl ein möglichst schnelles wie auch ein möglichst vollständiges Laden wirken sich jedoch negativ auf die Lebensdauer des Energiespeichers aus. Für ein schnelles Laden wird regelmäßig ein hoher Ladestrom verwendet und viel Abwärme erzeugt. Daher werden vorliegend die vorangegangenen Nutzungs- und Ladungsphasen vorteilhaft genutzt, um die Dauer der bevorstehenden Ladephase und den Energieverbrauch der nachfolgenden Nutzungsphase zu schätzen und dann das Ladeschema derart einzustellen, dass ein möglichst schonendes Laden während der zur Verfügung stehenden Dauer erfolgt und dass die erzielte Ladung möglichst für die nachfolgende Nutzungsphase ausreicht. Dabei wird insbesondere ausgenutzt, dass die Nutzung und das Laden, d.h. das Nutzungs- und Ladeverhalten, regelmäßig einem Muster folgen und sich durch Erkennung dieses Musters entsprechende Vorhersagen über zukünftige Ladephasen und Nutzungsphasen machen lassen. Dies steht im Gegensatz zur eingangs genannten DE 10 2019 218 616 A1, welche nicht auf eine solche Erkennung von Mustern zurückgreift, sondern stattdessen eine Rückmeldung des Nutzers erfordert.

Entsprechend werden vorliegend für das Laden in einer bevorstehenden Ladephase eine voraussichtliche Dauer der bevorstehenden Ladephase sowie ein voraussichtlicher Energieverbrauch einer nachfolgenden Nutzungsphase basierend auf vorangegangenen Ladephasen sowie basierend auf vorangegangenen Nutzungsphasen bestimmt. Basierend auf dem voraussichtlichen Energieverbrauch wird dann eine benötigte Ladung für den Energiespeicher berechnet, dies wird auch als "Berechnung der Ladung" bezeichnet. Die benötigte Ladung ist insbesondere diejenige Ladung, welche benötigt wird, um den voraussichtlichen Energieverbrauch während der nachfolgenden Nutzungsphase zu gewährleisten. Das Bestimmen des voraussichtlichen Energieverbrauchs wird auch als "Prognose des Energieverbrauchs" bezeichnet. Das Bestimmen der voraussichtlichen Dauer wird auch als "Prognose der Ladedauer" bezeichnet. Dies steht im Gegensatz zur eingangs genannten DE 10 2019 218 616 A1, welche mit dem Evaluierungsbetrieb gerade nicht gezielt das Lade- und Nutzungsverhalten mit Bezug auf den Energieverbrauch und die Ladedauer untersucht, sondern lediglich vom Nutzer eine Rückmeldung zum Betrieb des Hörgeräts hinsichtlich Sprachverständlichkeit, Lautstärke, Klang, Beeinträchtigung durch Störgeräusche etc. fordert. Darauf aufbauend werden dann die Betriebsparameter des Hörgeräts für eine Nutzungsphase angepasst, nicht aber ein Ladeschema für eine Ladephase.

Die bevorstehende Ladephase wird auch als "aktuelle" oder "nächste" Ladephase bezeichnet und ist allgemein diejenige Ladephase, welche als nächstes ansteht. In einer geeigneten Ausgestaltung werden der voraussichtliche Energieverbrauch und die voraussichtliche Dauer am Beginn der bevorstehenden Ladephase bestimmt, z.B. beim Verbinden des mobilen Geräts mit dem Ladegerät. Unter "nachfolgender Nutzungsphase" wird insbesondere diejenige Nutzungsphase verstanden, welche sich unmittelbar an die bevorstehende Ladephase anschließt. Unter "bestimmen" wird insbesondere auch speziell "geschätzt", "berechnet" oder "errechnet" verstanden. Die Dauer der Ladephase wird auch als Ladedauer oder Lade-Zeitspanne bezeichnet. Auch die Nutzungsphase weist eine Dauer auf, welche entsprechend auch als Nutzungs-Zeitspanne oder als Entlade-Zeitspanne bezeichnet wird.

Für die bevorstehende Ladephase wird dann das Ladeschema zum Laden des Energiespeichers basierend auf der benötigten Ladung und der voraussichtlichen Dauer eingestellt. Das Einstellen des Ladeschemas wird auch als "Planung des Ladevorgangs" bezeichnet. Das Ladeschema wird also mithilfe eine Prognose (genauer gesagt, zweier Prognosen, nämlich einerseits der Ladedauer und andererseits des Energieverbrauchs) angepasst, wobei diese Prognose aus historischen Daten abgeleitet wird, nämlich aus dem Nutzungs- und Ladeverhalten und somit aus Informationen über vorangegangene Nutzungsphasen und vorangegangene Ladephasen. Damit lässt sich das Laden des Energiespeichers optimieren, denn die Dauer der Ladephase und die benötigte Ladung sind nunmehr vor dem Ende der Ladephase und insbesondere zu deren Beginn bekannt, sodass das Ladeschema entsprechend zielgerichtet eingestellt wird. Ein unnötig schnelles und/oder vollständiges Laden wird damit vermieden. In einer zweckmäßigen Weiterbildung wird ein unnötig schnelles und/oder vollständiges Laden vermieden, sofern eine bestimmte Gewissheit bezüglich der nächsten Nutzungsphase vorliegt, d.h. mit welcher Gewissheit die Prognose zutreffend ist. Die Gewissheit ist somit ein Schwellwert, welcher ein Mindestmaß an Sicherheit für die Prognose fordert. Falls die Gewissheit nicht erreicht wird, z.B. da hierfür noch nicht hinreichend Daten gesammelt wurden, wird geeigneterweise ein Sicherheitswert von der voraussichtlichen Dauer subtrahiert und/oder zur benötigten Ladung addiert, sodass dann in beschränktem Rahmen zu schnell oder zu voll geladen wird.

Die historischen Daten sind in einer geeigneten Ausgestaltung lediglich Daten des Nutzers und werden z.B. nach einer ersten Inbetriebnahme des Geräts gesammelt und währenddessen wird z.B. ein Standardnutzungs- und Standardladeverhalten angenommen. Alternativ sind die historischen Daten zunächst historische Daten von anderen Nutzern und diesen werden dann während der Nutzung des Geräts durch den Nutzer dessen Daten hinzugefügt. Das Ladeschema passt sich dann insgesamt vorteilhafterweise immer weiter an den Nutzer des Geräts an.

Das Ladeschema wird entweder vom Ladegerät selbst eingestellt oder von einem anderen Gerät, z.B. dem mobilen Gerät oder einem Zusatzgerät oder einem Server z.B. des Herstellers des Geräts, und von diesem dann an das Ladegerät übermittelt. Schließlich wird dann der Energiespeicher mit dem Ladegerät während der Ladephase (d.h. die vormals bevorstehende Ladephase) gemäß dem Ladeschema geladen, dies wird auch als "Durchführung des Ladevorgangs" bezeichnet. Zweckmäßig ist auch eine Ausgestaltung, bei welcher der Nutzer vor einer ersten Inbetriebnahme nach seinem/ihrem typischen Lade- und Nutzungsverhalten befragt wird und dann anhand der Antworten einem dementsprechenden Cluster an Nutzern mit ähnlichen Antworten zugeordnet wird. Dem Cluster wiederum ist ein typisches Ladeschema zugeordnet, welcher dann zunächst auch für den Nutzer verwendet wird.

Bevorzugterweise wird das Ladeschema für die bevorstehende Ladephase derart eingestellt, dass die voraussichtliche Dauer der Ladephase zum Erreichen der benötigten Ladung bestmöglich, vorzugsweise maximal, genutzt wird, d.h. insbesondere, dass eine Lebensdauer des Energiespeichers maximiert wird. Anstatt den Energiespeicher aufgrund einer ungewissen Dauer der Ladephase möglichst schnell zu laden, wird vorliegend eine möglichst geringe Ladegeschwindigkeit gewählt, welche gerade so hoch ist, dass die voraussichtlich zur Verfügung stehende Dauer maximal genutzt wird. Der Energiespeicher wird dadurch besonders langsam und somit besonders schonend geladen. Für Energiespeicher, für welche ein zu langsames Laden nachteilig ist, wird dies zweckmäßigerweise analog berücksichtigt. Hier wird ohne Beschränkung der Allgemeinheit jedoch davon ausgegangen, dass ein möglichst langsames Laden immer vorteilhaft ist.

In einer geeigneten Ausgestaltung gibt das Ladeschema einen Ladestrom zum Laden vor und das Ladeschema wird derart ausgewählt, dass zum Erreichen der benötigten Ladung während der voraussichtlichen Dauer der Ladephase der Ladestrom minimiert wird. Auf diese Weise ist ein besonders schonendes Laden des Energiespeichers realisiert. Der Ladestrom wird so gering wie möglich gewählt, jedoch nicht geringer als zum Erreichen der Ladung während der Ladedauer erforderlich. Der Ladestrom ist somit insbesondere derart bemessen, dass der Energiespeicher erst am Ende der gesamten, zur Verfügung stehenden Ladedauer auf die benötigte Ladung aufgeladen ist, d.h. dass die Ladung nicht schon zu einem früheren Zeitpunkt an den Energiespeicher übertragen wurde. Der Ladestrom ist dadurch möglichst klein bemessen und das Laden entsprechend maximal schonend. Das schonende Laden ist allgemein auch ökologisch vorteilhaft. Falls technisch bedingt für den Ladestrom eine Untergrenze vorliegt, wird das Laden zweckmäßigerweise in wenigstens zwei Phasen unterteilt, nämlich in eine erste Phase, in welcher mit dem Ladestrom geladen wird, und eine zweite Phase, in welcher nicht geladen wird, sodass trotz der Untergrenze für den Ladestrom trotzdem die benötigte Ladung erreicht wird und trotz längerer voraussichtlicher Dauer nicht überschritten wird. Die Reihenfolge der Phasen ist im Grunde beliebig.

Weiterhin wurde vorliegend erkannt, dass eine Ladung im Bereich von 85% (oder sogar noch weniger) bis 95% einer Gesamtkapazität, speziell von 92% der Gesamtkapazität, zu einer deutlich längeren Lebensdauer führt, als ein vollständiges Laden, d.h. eine Ladung von 100%. So wurde beobachtet, dass eine Ladung von 92% die Lebensdauer eines Lithium-Akkus etwa um einen Faktor 2 erhöht, typischerweise von 1000 Lade-/Entladezyklen auf 2000 Lade-/Entladezyklen. In einer vorteilhaften Ausgestaltung wird daher die benötigte Ladung auf einen Maximalwert aufgerundet, welcher wenigstens 65%, bevorzugt wenigstens 85%, und höchstens 95% einer Gesamtkapazität des Energiespeichers beträgt, besonders bevorzugt 92%. Mit anderen Worten: falls für die benötigte Ladung zunächst ein Wert unterhalb des Maximalwerts berechnet wird, wird die benötigte Ladung auf den Maximalwert erhöht. Die Gesamtkapazität wird auch als "mögliche Gesamtladung" oder "Nennkapazität" bezeichnet.

Zweckmäßigerweise wird ein Hinweis ausgegeben, falls für die benötigte Ladung ein Wert oberhalb eines Maximalwerts, insbesondere des Maximalwerts wie oben bereits beschrieben, berechnet wird. Der Hinweis wird ausgegeben, um einen Nutzer des mobilen Geräts zur Anpassung der Dauer der Ladephase oder des Energieverbrauchs zu veranlassen. Dies basiert auf der Überlegung, dass ein Laden über den Maximalwert hinaus potentiell nachteilig ist und der Nutzer hierauf entsprechend hingewiesen werden soll. Um eine mangelnde Energieversorgung während der nachfolgenden Nutzungsphase zu vermeiden, wird dem Nutzer beispielsweise vorgeschlagen, die Ladedauer über die zuvor bestimmte, voraussichtliche Dauer hinaus zu verlängern. Alternativ oder zusätzlich wird dem Nutzer angeboten, während der nachfolgenden Nutzungsphase auf eine oder mehrere Funktionen des Geräts zu verzichten oder diese abzuschalten, um den tatsächlichen Energieverbrauch gegenüber dem zuvor bestimmten, voraussichtlichen Energieverbrauch zu reduzieren. Alternativ oder zusätzlich wird dem Nutzer angeboten, den Energiespeicher trotzdem über den Maximalwert hinaus zu laden.

Der Hinweis wird in einer geeigneten Ausgestaltung vom Gerät an den Nutzer ausgebeben, alternativ oder zusätzlich von dem Ladegerät und/oder von einem Zusatzgerät, welches zum Datenaustausch mit dem Gerät verbunden ist, beispielsweise ist das mobile Gerät ein Hörgerät und das Zusatzgerät ein Smartphone.

Vorzugsweise wird bei der Bestimmung des voraussichtlichen Energieverbrauchs und der voraussichtlichen Dauer der bevorstehenden Ladephase ein 24h-Zeitrahmen verwendet. Dem liegt die Überlegung zugrunde, dass die Nutzung des Geräts abhängig ist vom Tagesrhythmus des Nutzers und entsprechend grundsätzlich eine Periodizität mit einer Periode von 24 Stunden zu erwarten ist. Der 24h-Zeitrahmen ist somit vorteilhaft für die Auswertung der vorangegangenen Nutzungs- und Ladephasen und die darauf basierenden Prognosen. Beginn und Ende des 24h-Zeitrahmens fallen dabei nicht notwendigerweise auf 00:00 Uhr. Ein Hörgerät wird typischerweise tagsüber genutzt und nachts geladen, d.h. eine Nutzungsphase und eine Ladephase wechseln sich in einem 24h-Rhythmus ab, wobei die Nutzungsphase typischerweise länger ist als die Ladephase. Die Nutzungsphase endet typischerweise vor 24:00 Uhr, kann aber auch darüber hinaus gehen, z.B. falls der Nutzer ein Schichtarbeiter ist. Innerhalb des 24h-Zeitrahmens beginnt die Nutzungsphase nicht notwendigerweise immer zu derselben Zeit, zumindest ungefähr ist dies jedoch typischerweise der Fall. Gleiches gilt für das Ende der Nutzungsphase sowie für Beginn und Ende der Ladephase. Zahlreiche Variationen sind denkbar, beispielsweise sind mehrere Nutzungs- und Ladephasen innerhalb eines des 24h-Zeitrahmens vorhanden, z.B. wenn das Gerät zur Mittagszeit kurz geladen wird, beispielsweise, weil der Nutzer einen Mittagsschlaf macht. Variationen ergeben sich insbesondere auch dadurch, dass einige Tage Arbeitstage sind, andere wiederum Wochenendtage oder Urlaubstage oder Krankheitstage, oder dass an manchen Tagen in einem Büro gearbeitet wird und an anderen Tagen zu Hause.

Bevorzugterweise werden der voraussichtliche Energieverbrauch und die voraussichtliche Dauer der bevorstehenden Ladephase mittels einer Lernmaschine bestimmt, welche mit den vorangegangenen Nutzungsphasen und/oder mit den vorangegangenen Ladephasen trainiert ist. Das Training mit den vorangegangenen Nutzungsphasen ist grundsätzlich unabhängig vom Training mit den vorangegangenen Ladephasen, vorteilhafterweise wird aber beides kombiniert. Ein Grundgedanke ist nun insbesondere, dass der Lernmaschine Trainingsinformationen aus den vorangegangenen Nutzungsphasen und den vorangegangenen Ladephasen zugeführt werden. Diese Trainingsinformationen sind geeigneterweise die jeweilige Dauer der vorangegangenen Ladephasen und der jeweilige Energieverbrauch der vorangegangenen Nutzungsphasen. Aus den Trainingsinformationen leitet die Lernmaschine Informationen über die bevorstehende Ladephase und die nachfolgende Nutzungsphase ab, geeigneterweise direkt die Dauer der bevorstehenden Ladephase und den voraussichtlichen Energieverbrauch der nachfolgenden Nutzungsphase. Die Lernmaschine ist in einer geeigneten Ausgestaltung programmiert, d.h. insbesondere ein festes Programm. In einer anderen geeigneten Ausgestaltung ist die Lernmaschine eine künstliche Intelligenz.

Die Trainingsinformationen sind zweckmäßigerweise jedoch detaillierter und umfassen Informationen, aus welchen die Ladedauer und der voraussichtliche Energieverbrauch ableitbar sind, beispielsweise Beginn und Ende (d.h. Zeitpunkte z.B. in Form eines Zeitstempels) einer jeweiligen Ladephase oder Nutzungsphase. Alternativ oder zusätzlich umfassen die Trainingsinformationen Angaben darüber, zu welchem Zeitpunkt das mobile Gerät aktiv ist, d.h. in einer Nutzungsphase ist, zu welchem Zeitpunkt das mobile Gerät geladen wird, d.h. in einer Ladephase ist, zu welchem Zeitpunkt sich das mobile Gerät in welchem Betriebszustand befindet, zu welchem Zeitpunkt das mobile Gerät wieviel Energie verbraucht. Der Energieverbrauch ist insbesondere durch den Stromverbrauch über einen bestimmten Zeitraum charakterisiert, sodass der Strom, welcher zu einem gegebenen Zeitpunkt benötigt wird ein Maß für den Energieverbrauch zu diesem Zeitpunkt ist.

Der Betriebszustand ist beispielsweise ein Audio-Streaming Modus (z.B. Musik-Streaming, d.h. monodirektionales Audio-Streaming), ein Headset-Modus (d.h. ein Betriebszustand, in welchem ein bidirektionales Audio-Streaming erfolgt, z.B. während eines Telefongesprächs oder einer Videokonferenz), ein Fitness-Tracking Modus (d.h. ein Betriebszustand, in welchem ein oder mehrere Sensoren, z.B. ein PPG-Sensor, zur Überwachung von Körperfunktionen aktiviert sind, z.B. zur Pulsmessung, oder zur Hautwiderstandsmessung), ein Health-Monitoring Modus (d.h. ein Betriebszustand zur Gesundheitsüberwachung, in welchem z.B. ein erhöhter Energieverbrauch durch den Betrieb von Sensoren und Auswertung von Sensordaten vorliegt, speziell zu bestimmten Tageszeiten), ein Standardmodus (d.h. ein Betriebszustand, in welchem lediglich oder überwiegend bestimmungsgemäße Funktionen des Geräts verwendet werden, bei einem Hörgerät z.B. eine Modifikation zum Ausgleich eines Hördefizits). Aus den angeführten Beispielen wird deutlich, dass allgemein die Betriebszustände durch einen unterschiedlichen Energieverbrauch charakterisiert sind, welcher vor allem davon abhängt, welche Komponenten des mobilen Geräts für den jeweiligen Betriebszustand aktiv sind. Während einer jeweiligen Nutzungsphase wechseln sich typischerweise mehrere verschiedene Betriebszustände ab, wobei ein jeweiliger Betriebszustand auch mehrmals aktiv sein kann. Die Kenntnis darüber, wann und wie lange ein jeweiliger Betriebszustand aktiv ist, ermöglicht dann eine Bestimmung des Energieverbrauchs und basierend darauf dann eine Prognose darüber, welche Betriebszustände zu welchem Zeitpunkt während der nachfolgenden Nutzungsphase aktiv sind und welcher Energieverbrauch sich dadurch ergibt. Für die Ladephase ergibt sich analog, dass durch die Kenntnis der Dauern vorangegangener Ladephasen dann eine Prognose der Dauer der bevorstehenden Ladephase möglich ist. Beides wird vorliegend mittels der Lernmaschine umgesetzt. Die Lernmaschine lernt demnach, zu welchem Zeitpunkt welcher Betriebszustand aktiv ist und zu welchem Zeitpunkt das mobile Gerät geladen wird und prognostiziert damit den voraussichtlichen Energieverbrauch und die voraussichtliche Dauer.

Die Lernmaschine wird entweder als Teil des Verfahrens trainiert oder separat davon. Die Lernmaschine überwacht hierzu in einem Training den Betriebszustand des mobilen Geräts und erhebt und speichert dabei die oben genannten Trainingsinformationen. Sobald eine hinreichende Menge an Trainingsinformationen erhoben wurde und die Lernmaschine damit trainiert wurde, ist diese dann zur Prognose bereit. Beispielweise wird die Anzahl an Lade-/Entladezyklen gezählt, und ab einer bestimmten Anzahl von Lade-/Entladezyklen, z.B. 50 Stück, wird davon ausgegangen, dass eine hinreichende Menge an Trainingsinformationen vorhanden ist und die Lernmaschine dann damit trainiert. Das Training wird vorzugsweise fortgeführt, selbst wenn bereits die vorgegebene Menge an Trainingsinformationen erhoben wurde, sodass die Datenbasis für die Prognose weiter vergrößert wird und diese entsprechend zuverlässiger wird.

Die Lernmaschine ist beispielsweise mit einem Computerprogramm realisiert, welches auf einem entsprechenden Computer ausgeführt wird, beispielsweise auf dem mobilen Gerät selbst, auf dem Ladegerät, auf einem Server oder auf einem Zusatzgerät, z.B. einem Smartphone, welcher/welches mit dem mobilen Gerät zum Datenaustausch verbunden ist. Geeignet ist auch eine Verteilung der Lernmaschine auf mehrere der vorgenannten Computer. Die Lernmaschine ist grundsätzlich auf verschiedenste Weisen realisierbar. Die nachfolgend beschriebene Variante mit einem Bayesschen Netz ist dabei besonders bevorzugt.

In einer bevorzugten Ausgestaltung weist die Lernmaschine ein Bayessches Netz auf, mit mehreren Elternknoten (d.h. "parent nodes"), welche jeweils ein kalendarisches Merkmal, ein Ortsmerkmal oder ein Umgebungsmerkmal repräsentieren, und mit mehreren Kindknoten (d.h. "child nodes"), welche jeweils ein Zeitintervall repräsentieren, während welchem ein bestimmter Betriebszustand aktiv ist. Kalendarische Merkmale, Ortsmerkmale und Umgebungsmerkmale werden allgemein auch jeweils als Merkmale bezeichnet, sodass jeder Elternknoten allgemein ein Merkmal repräsentiert. Auch die Kombination eines Betriebszustands mit einem Zeitintervall wird als Merkmal bezeichnet.

Ein kalendarisches Merkmal ist beispielsweise ein Wochentag, eine Angabe, ob ein gegebener Tag ein Urlaubstag ist oder nicht, eine Angabe, ob ein gegebener Tag ein Dienstreise-Tag ist oder nicht oder eine Angabe, ob ein gegebener Tag ein Feiertag ist und wenn ja, welcher Feiertag. Ein Ortsmerkmal bezeichnet allgemein einen bestimmten Ort oder eine bestimmte Position und umfasst hierzu beispielsweise GPS-Koordinaten oder eine Ortsbezeichnung, z.B. "Zuhause", "Büro", "Fitnesscenter" und dergleichen. Ein Umgebungsmerkmal charakterisiert dagegen allgemein die Art oder den Charakter einer Umgebung, unabhängig vom konkreten Ort. Beispiele für Umgebungsmerkmale sind "drinnen", "draußen", "laut", "leise", "mit Hintergrundgeräuschen", "ohne Hintergrundgeräusche" und dergleichen. Beispielsweise ergeben sich Elternknoten, welche wie folgt Merkmale mit möglichen Werten repräsentieren: Wochentag {Mo, Di, Mi, Do, Fr, Sa, So}, Dienstreise-Tag {ja, nein}, Urlaubstag {ja, nein}, Festtag {Heiligabend, Silvester, Karfreitag, Ostersonntag, Ostermontag; ...}, Ort {Zuhause, Büro, Fitnesscenter, ...}, Umgebung {drinnen, draußen}.

Die Kindknoten repräsentieren jeweils ein Zeitintervall eines Betriebszustands. Bei einer Anzahl A an Zeitintervallen und einer Anzahl B an Betriebszuständen ergeben sich entsprechend A*B Kindknoten. Bei Verwendung eines 24h-Zeitrahmens oder allgemein eines beliebigen Zeitrahmens wird dieser in mehrere Zeitintervalle aufgeteilt, in einer geeigneten Ausgestaltung in aufeinanderfolgende Zeitintervalle von je 5 min Länge. Der Zeitrahmen und die Länge sind jedoch grundsätzlich variabel. Die Zeitintervalle müssen auch nicht zwingend alle dieselbe Länge aufweisen, dies ist aber bevorzugt. Beispielhafte Betriebszustände wurden weiter oben bereits genannt. Beispielsweise ergeben sich für den Betriebszustand "Fitness-Tracking Modus" dann mehrere Kindknoten wie folgt: (..., Fitness-Tracking Modus 15:00-15:05 Uhr, Fitness-Tracking Modus 15:05-15:10 Uhr, Fitness-Tracking Modus 15:10-15:15 Uhr, ...). Weitere Kindknoten ergeben sich analog für andere Betriebszustände.

Jedem Knoten (d.h. jedem Elternknoten und jedem Kindknoten) ist eine Wahrscheinlichkeitstabelle (d.h. "conditional probability table") zugeordnet, jeweils mit einer Anzahl von bedingten Wahrscheinlichkeiten, kurz auch lediglich als "Wahrscheinlichkeiten" bezeichnet. Diese Wahrscheinlichkeiten geben insbesondere an, wie wahrscheinlich das jeweilige Merkmal auftritt oder nicht, d.h. erfüllt ist oder nicht. Speziell bei den Kindknoten sind diese Wahrscheinlichkeiten abhängig von den Wahrscheinlichkeiten in den Wahrscheinlichkeitstabellen der Elternknoten, die mit dem jeweiligen Kindknoten verknüpft sind. Die Wahrscheinlichkeiten werden im Rahmen des Trainings der Lernmaschine basierend auf den vorangegangenen Nutzungsphasen und/oder Ladephasen erzeugt, sodass dann mit der trainierten Lernmaschine die Wahrscheinlichkeit eines jeweiligen Betriebszustands für ein jeweiliges Zeitintervall prognostiziert wird. Zum einen wird dabei die voraussichtliche Dauer der bevorstehenden Ladephase bestimmt, denn während der Ladephase ist keiner der Betriebszustände aktiv oder das Laden selbst ist ein Betriebszustand und dann in einigen Zeitintervallen entsprechend besonders wahrscheinlich und in anderen wiederum nicht. Zum anderen wird der voraussichtliche Energieverbrauch bestimmt, indem bestimmt wird, wie lange welcher Betriebszustand während der nachfolgenden Nutzungsphase aktiv ist und mit Kenntnis des Energieverbrauchs des jeweiligen Betriebszustands dann der Energieverbrauch während des Zeitintervalls (auch als Intervall-Energieverbrauch bezeichnet) bestimmt und schließlich der Energieverbrauch über alle Zeitintervalle summiert. Für ein jeweiliges Zeitintervall wird beispielsweise derjenige Betriebszustand als aktiv prognostiziert, welcher für dieses Zeitintervall am Wahrscheinlichsten ist.

In einer geeigneten Ausgestaltung, insbesondere zur Umsetzung des oben beschriebenen Vorgehens, wird der voraussichtliche Energieverbrauch bestimmt, indem - insbesondere mittels der Lernmaschine - die nachfolgende Nutzungsphase in mehrere Zeitintervalle unterteilt wird und indem basierend auf den vorangegangenen Nutzungsphasen für jedes der Zeitintervalle ein Intervall-Energieverbrauch bestimmt wird, welcher ein Erwartungswert für den voraussichtlichen Energieverbrauch des mobilen Geräts während dieses Zeitintervalls ist. Ein jeweiliger Intervall-Energieverbrauch wird geeigneterweise als Summe von gewichteten Einzel-Energieverbräuchen bestimmt, wobei die gewichteten Einzel-Energieverbräuche dadurch bestimmt werden, dass für jedes Zeitintervall ein Einzel-Energieverbrauch eines jeweiligen Betriebszustands mit einer Wahrscheinlichkeit gewichtet wird, welche angibt, wie wahrscheinlich der jeweilige Betriebszustand während des Zeitintervalls aktiv ist, sodass sich für jedes Zeitintervall eine Anzahl an gewichteten Einzel-Energieverbräuchen ergibt. Der voraussichtliche Energieverbrauch während der nachfolgenden Nutzungsphase insgesamt wird dann bestimmt, indem beispielsweise die Intervall-Energieverbräuche summiert werden. In einer zweckmäßigen Ausgestaltung wird zusätzlich zu den Intervall-Energieverbräuchen noch ein Sicherheitsaufschlag hinzuaddiert, z.B. 20% der Summe Intervall-Energieverbräuche, sodass sich der voraussichtliche Energieverbrauch dann als Summe der Intervall-Energieverbräuche und des Sicherheitsaufschlags ergibt und auch die berechnete benötigte Ladung einen entsprechenden Sicherheitsaufschlag enthält.

Das vorstehend beschriebene Vorgehen wird nachfolgend genauer erläutert: Kurz gesagt wird für die nachfolgende Nutzungsphase prognostiziert, mit welcher Wahrscheinlichkeit und wie lange (d.h. in welchem Umfang) die einzelnen Betriebszustände während der nachfolgenden Nutzungsphase auftreten. Da für jeden Betriebszustand dessen Energiebedarf bekannt ist, wird damit auch der voraussichtliche Energieverbrauch bestimmt. Jeder Betriebszustand stellt eine stromfordernde Nutzung dar und bildet während einer Nutzungsphase somit einen Anteil einer Gesamtnutzung während der Nutzungsphase. Die Prognose des voraussichtlichen Energieverbrauchs basiert dabei zweckmäßigerweise auf dem zuvor durchgeführten Training. Die nachfolgende Nutzungsphase wird nun zuerst in mehrere Zeitintervalle unterteilt, z.B. dadurch, dass eine Dauer der nachfolgenden Nutzungsphase geschätzt wird und diese Dauer in mehrere Zeitintervalle unterteilt wird. Die Dauer der Nutzungsphase wird beispielsweise anhand der Dauer der vorangegangenen Nutzungsphasen geschätzt, analog zur Bestimmung der Dauer der bevorstehenden Ladephase. Die Zeitintervalle entsprechen insbesondere den Zeitintervallen, welche auch durch die Kindknoten abgebildet werden. Für jedes der Zeitintervalle wird nun der Intervall-Energieverbrauch während des jeweiligen Zeitintervalls bestimmt. Beispielsweise wird dabei für jedes Zeitintervall der Einzel-Energieverbrauch eines jeweiligen Betriebszustands des mobilen Geräts mit derjenigen Wahrscheinlichkeit gewichtet, welche angibt, wie wahrscheinlich der jeweilige Betriebszustand während des entsprechenden Zeitintervalls aktiv ist, sodass sich für jedes Zeitintervall eine Anzahl an gewichteten Einzel-Energieverbräuchen ergibt, nämlich ein gewichteter Einzel-Energieverbrauch für jeden Betriebszustand. Die Wahrscheinlichkeiten werden insbesondere den oben genannten Wahrscheinlichkeitstabellen entnommen. Die gewichteten Einzel-Energieverbräuche werden dann zu dem Intervall-Energieverbrauch summiert und zwar für jedes Zeitintervall der nachfolgenden Nutzungsphase, sodass sich mehrere Intervall-Energieverbräuche ergeben, welche jeweils ein Erwartungswert für den voraussichtlichen Energieverbrauch während des jeweiligen Zeitintervalls darstellen. Diese Erwartungswerte werden dann ebenfalls summiert, um den voraussichtlichen Energieverbrauch während der nachfolgenden Nutzungsphase zu bestimmen.

Die voraussichtliche Dauer der bevorstehenden Ladephase wird - wie bereits angedeutet - vorzugsweise basierend auf den Dauern der vorangegangenen Ladephasen bestimmt. Im Grunde wird somit ein Ladeverhalten des Nutzers überwacht, d.h. es wird überwacht wann und/oder wie lange das mobile Gerät zum Laden mit einem Ladegerät verbunden wird. Die Dauer einer jeweiligen vorangegangenen Ladephase wird beispielsweise direkt gemessen oder indirekt aus Beginn und Ende der vorangegangenen Nutzungsphasen abgeleitet, da sich diese mit den Ladephasen abwechseln und da sich insbesondere eine Ladephase immer unmittelbar an eine Nutzungsphase anschließt und umgekehrt.

Vorteile der Erfindung bestehen insbesondere darin, dass die Lebensdauer des Energiespeichers verlängert wird, ohne vom Nutzer eine Verhaltensänderung hinsichtlich der Nutzung und des Ladens des mobilen Geräts zu erfordern. Vielmehr wird das Laden an das individuelle Nutzungs- und Ladeverhalten des Nutzers angepasst, indem dieses Nutzungs- und Ladeverhalten zunächst überwacht wird und dann basierend hierauf eine Prognose des zukünftigen Nutzungs- und Ladeverhaltens erfolgt, nämlich des voraussichtlichen Energieverbrauchs und der voraussichtlichen Dauer. Anhand dieser Prognose wird dann das Ladeschema optimal eingestellt, um den Zielkonflikt zwischen einer möglichst ausreichenden Ladung und einem möglichst schonenden Laden optimal aufzulösen. Dabei kann sich grundsätzlich auch die Schlussfolgerung ergeben, dass in einer bevorstehenden Ladephase der Energiespeicher gar nicht geladen wird, obwohl dieser mit dem Ladegerät verbunden ist, z.B. weil die Ladephase lediglich kurz ist, z.B. nur einige Minuten lang. Umgekehrt kann sich auch die Schlussfolgerung ergeben, dass eine benötigte Ladung während der zur Verfügung stehenden Dauer gar nicht möglich ist. In diesem Fall wird z.B. über das mobile Gerät oder über das Ladegerät zweckmäßigerweise ein entsprechender Hinweis an den Nutzer ausgegeben, z.B. derart, dass eine zusätzliche oder längere Ladephase erforderlich ist. Alternativ oder zusätzlich werden ein oder mehrere Funktionen, insbesondere solche mit lediglich geringer Relevanz, des mobilen Geräts während der nachfolgenden Nutzungsphase deaktiviert, um den tatsächlichen Energieverbrauch zu reduzieren. Zweckmäßigerweise wird der Nutzer hierüber entsprechend informiert. Das Nutzungs- und Ladeverhalten, also der Energieverbrauch während vorangegangener Nutzungsphasen und die Dauern vorangegangener Ladephasen, wird vorteilhaft aus einer Ladeperspektive für den Energiespeicher betrachtet, da der Energieverbrauch und mit dem Laden auch die Energiezufuhr überwacht werden und die daraus gewonnen Informationen für die beschriebenen Prognosen verwendet werden.

Insbesondere durch die Berücksichtigung diverser Merkmale wie weiter oben beschrieben, lässt sich auch ein vergleichsweise komplexes Nutzungs- und Ladeverhalten für eine Prognose nutzen. Dabei wird unter "komplex" insbesondere verstanden, dass das Nutzungs- und Ladeverhalten nicht lediglich dem gewählten Zeitrahmen folgt, z.B. einem 24h-Rhythmus, sondern z.B., dass sich eine Nutzung des mobilen Geräts an Werktagen (Montag bis Freitag) von einer Nutzung am Wochenende (Samstag, Sonntag) unterscheidet. Auch werden insbesondere bestimmte regelmäßige Aktivitäten des Nutzers an bestimmten Wochentagen oder Tagen des Monats oder des Jahres oder mit gleichmäßigem Abstand zueinander berücksichtigt, z.B. ein wöchentliches Meeting oder ein Besuch eines Fitnessstudios alle zwei Tage.

Das Nutzungs- und Ladeverhalten bestimmt maßgeblich den Energieverbrauch des mobilen Geräts sowie die benötigte Ladung. Beispiele für Nutzungen speziell eines Hörgeräts mit unterschiedlichem Energieverbrauch sind Sport, Gärtnern, Telefonanrufe, Abendentspannung, Mittagessen, Hören eines Hörbuchs im öffentlichen Nahverkehr, Arbeiten, Kochen mit der Familie, Nachrichtenschauen. Beispielsweise nutzt der Nutzer an Werktagen einen Headset-Modus, um Kollegen anzurufen. Im Headset-Modus hat das Gerät typischerweise einen hohen Energieverbrauch, da eine RF-Antenne des Geräts verwendet wird. In einem weiteren Beispiel hat der Nutzer regelmäßig, z.B. täglich oder wöchentlich, Meetings mit anderen Personen über eine längere Zeit, sodass ein entsprechender Energiebedarf absehbar ist. Speziell in einem solchen Fall, jedoch vorteilhaft auch allgemein, wird zweckmäßigerweise auf einen Kalender des Nutzers zugegriffen, um Nutzungsphasen und speziell die Nutzung bestimmter Betriebszustände zu erkennen und vorherzusagen. Der Kalender ist beispielsweise auf dem Geräts selbst oder auf einem Zusatzgerät hinterlegt, welches mit dem mobilen Gerät zum Datenaustausch verbunden ist. In einem weiteren Beispiel umfasst das Nutzungs- und Ladeverhalten, dass der Nutzer zu bestimmten Zeiten oder Tagen in einer ruhigen Umgebung verbringt, z.B. um ein Buch zu lesen, und dabei vergleichsweise wenig Funktionen des Geräts nutzt, wodurch der Energieverbrauch entsprechend gering ist. In einem weiteren Beispiel umfasst das Nutzungs- und Ladeverhalten ein spezielles zeitliches Muster beim Laden, z.B. dass das Gerät lediglich einmal am Tag zum Laden an ein Ladegerät angeschlossen wird, z.B. über Nacht, dass das Gerät mehrmals am Tag geladen wird, z.B. zusätzlich während einer Pause oder Mittagspause oder während eines kurzen Schlafs am Tag, dass das Gerät bei jeder Gelegenheit unabhängig vom Ladezustand geladen wird, dass das Gerät nur bei unterschreiten einer Mindestladung geladen wird. Das Ladeverhalten kann auch vollständig unspezifisch sein und kein Muster aufweisen.

Abseits einer Verwendung zur Optimierung des Ladeschemas beim Laden des Energiespeichers lassen sich die Informationen zum Nutzungs- und Ladeverhalten auch gewinnbringend für den Betrieb des mobilen Geräts nutzen, z.B. zur Festlegung einer Eingabe (insbesondere Betriebsparameter) für eine Sensormessung insbesondere für eine Gesundheitsanwendung, z.B. zur Festlegung einer PPG-Messfrequenz für einen PPG-Sensor zur PPG-Messung. Die Sensormessung erfolgt mit einem Sensor, welcher zweckmäßigerweise in dem Gerät untergebracht ist. Entsprechend werden in einer bevorzugten Ausgestaltung der voraussichtliche Energiebedarf und/oder die voraussichtliche Dauer zur Festlegung einer Eingabe für eine Sensormessung verwendet. Falls beispielsweise während der nachfolgenden Nutzungsphase eine sportliche Aktivität des Nutzers erwartet wird, d.h. die Wahrscheinlichkeit für einen entsprechenden Betriebszustand überschreitet in einem oder mehreren Zeitintervallen einen bestimmten Grenzwert, dann wird für eine hierbei durchgeführte Sensormessung mehr benötigte Ladung berücksichtigt, um während der sportlichen Aktivität die Sensormessung zu verbessern, z.B. um eine Messfrequenz der Sensormessung zu erhöhen. Umgekehrt ist vorteilhaft auch erkennbar, dass die Sensormessung möglicherweise gerade nicht benötigt wird und somit die benötigte Ladung reduziert wird.

Ein vorteilhaftes mobiles Gerät ist ausgebildet zur Verwendung in einem Verfahren wie vorstehend beschrieben. Hierzu weist das mobile Gerät insbesondere eine Steuereinheit auf, welche ausgebildet ist, das Verfahren durchzuführen.

Bevorzugterweise ist das mobile Gerät ein Hörgerät. Dies hat insbesondere den Vorteil, dass bereits im Hörgerät vorhandene Strukturen für das Verfahren genutzt werden. Eine solche Struktur ist z.B. eine Steuereinheit, welche einen jeweiligen Betriebszustand aktiviert oder deaktiviert und dies auch überwacht und diese Information entsprechend speichert. Ein weiterer Vorteil eines Hörgeräts ist, dass dieses regelmäßig über den Tag verteilt überwiegend aktiv ist und auch beim Laden zumindest nicht vollständig deaktiviert ist und somit durchgängig eingeschaltet ist.

Das Hörgerät ist insbesondere zur Versorgung eines Nutzers ausgebildet, welcher/welche ein Hördefizit aufweist. Hierzu weist das Hörgerät in einer möglichen Ausgestaltung ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Modifikation erfolgt insbesondere anhand eines individuellen Audiogramms des Nutzers, sodass ein individuelles Hördefizit des Nutzers ausgeglichen wird. Die Signalverarbeitung gibt als Ergebnis ein elektrisches Ausgangssignal aus, welches dann in einer geeigneten Ausgestaltung über einen Hörer des Hörgeräts wieder in Schall umgewandelt wird und an den Nutzer ausgegeben wird. Je nach Hörgerätetyp sind anstelle des Mikrofons auch andere Eingangswandler möglich, analog sind anstelle des Hörers je nach Hörgerätetyp auch andere Ausgangswandler möglich.

In einer bevorzugten Ausgestaltung werden Sprachinhalte mit dem mobilen Gerät aufgezeichnet und analysiert, um zusätzliche Informationen zur Nutzung des mobilen Geräts zu erhalten, z.B. werden hierzu angenommene oder abgesagte Verabredungen erkannt.

Analog ist ein vorteilhaftes Ladegerät ausgebildet zum Laden eines Energiespeichers eines mobilen Geräts wie vorstehend beschrieben nach einem Verfahren wie vorstehend beschrieben. Hierzu weist das Ladegerät insbesondere eine Steuereinheit auf, welche ausgebildet ist, das Verfahren durchzuführen und dadurch das mobile Gerät, genauer dessen Energiespeicher zu laden. Die Verwendung des Ladegeräts für das Verfahren hat insbesondere den Vorteil, dass das Ladegerät ein verlässliches Backup darstellt, falls der Energiespeicher des mobilen Geräts einmal soweit entleert ist, dass dieses vollständig deaktiviert werden muss und dann nicht mehr für das Verfahren, speziell zur Prognose, zur Verfügung steht. Das Ladegerät unterliegt zudem typischerweise weniger restriktiven Bauraum- und Energieverbrauchsbeschränkungen als das mobile Gerät, sodass das Ladegerät mit einer besonders hohen Rechenkapazität, Speicherkapazität und/oder einer permanenten Internetverbindung ausstattbar ist und zweckmäßigerweise auch ausgestattet ist. Entsprechend wird bei Durchführung des Verfahrens auf dem Ladegerät auch im mobilen Gerät vorteilhaft Energie eingespart.

In einer vorteilhaften Ausgestaltung ist das Ladegerät ein mobiles Ladegerät und weist somit selbst eine Sekundärzelle als Energiespeicher auf, aus welchem das mobile Gerät ladbar ist. Die Sekundärzelle ist insbesondere ein Lithium-Akku. In einer vorteilhaften Weiterbildung weist das Ladegerät zusätzlich einen Zusatz-Energiespeicher, insbesondere eine Brennstoffzelle auf, um die Sekundärzelle zu laden. Ein solches Ladegerät wird auch als "hybrides Ladegerät" bezeichnet. Der Zusatz-Energiespeicher ist insbesondere derart dimensioniert, dass dieser in Verbindung mit der Sekundärzelle mehr als eine einzelne 100% Ladung für das mobile Gerät bereitstellt. Vorteilhafterweise wird dann das beschriebene Verfahren zusätzlich dazu verwendet, um die Sekundärzelle aus dem Zusatz-Energiespeicher möglichst optimal zu laden. Neben der benötigten Ladung für das mobile Gerät wird dann auch eine Ladung für die Sekundärzelle basierend auf den vorangegangenen Nutzungsphasen und/oder Ladephasen berechnet. Dies ist vorteilhaft, wenn das Laden aus dem Zusatz-Energiespeicher langsam ist im Vergleich zum Laden aus der Sekundärzelle, sodass durch Kenntnis des Nutzungs- und Ladeverhaltens dann auch das Laden der Sekundärzelle optimiert wird, speziell derart, dass auch die Sekundärzelle möglichst schonend wie bereits beschrieben geladen wird. Dies ist typischerweise bei einer Brennstoffzelle als Zusatz-Energiespeicher der Fall.

Vorteilhaft ist auch eine Ausgestaltung, bei welcher das Verfahren auf einem Server ausgeführt wird, insbesondere als Cloud-Service. Der Server ist über eine Datenverbindung, z.B. Internet, mit dem Ladegerät und/oder dem mobilen Gerät verbunden. Diese Ausgestaltung hat den Vorteil, dass ein Server typischerweise eine deutlich größere Rechenkapazität aufweist und zukünftig abzusehen ist, dass Informationen über vorangegangene Nutzungsphasen und Ladephasen ohnehin auf einem solchen Server und gerade nicht lokal auf dem mobilen Gerät oder dem Ladegerät gespeichert werden und dann sinnvollerweise dort auch direkt verarbeitet werden, d.h. für das hier beschriebene Verfahren genutzt werden.

Die beschriebenen Durchführungen des Verfahrens auf dem mobilen Gerät, dem Ladegerät oder dem Server sind auch vorteilhaft kombinierbar, z.B. derart, dass die Schritte des Verfahrens auf zwei oder mehrere dieser Geräte verteilt sind.

Nachfolgend werden Ausführungsbeispiele der Erfindung anhand einer Zeichnung näher erläutert. Darin zeigen jeweils schematisch:
- Fig. 1: ein mobiles Gerät und ein Zusatzgerät,
- Fig. 2: das mobile Gerät aus Fig. 1 und ein Ladegerät,
- Fig. 3: ein Verfahren,
- Fig. 4: Nutz- und Ladephasen im Verlauf der Zeit,
- Fig. 5: ausschnittsweise ein Bayessches Netz,
- Fig. 6: verschiedene Aktivitäten eines Nutzers im Verlauf einer Woche.

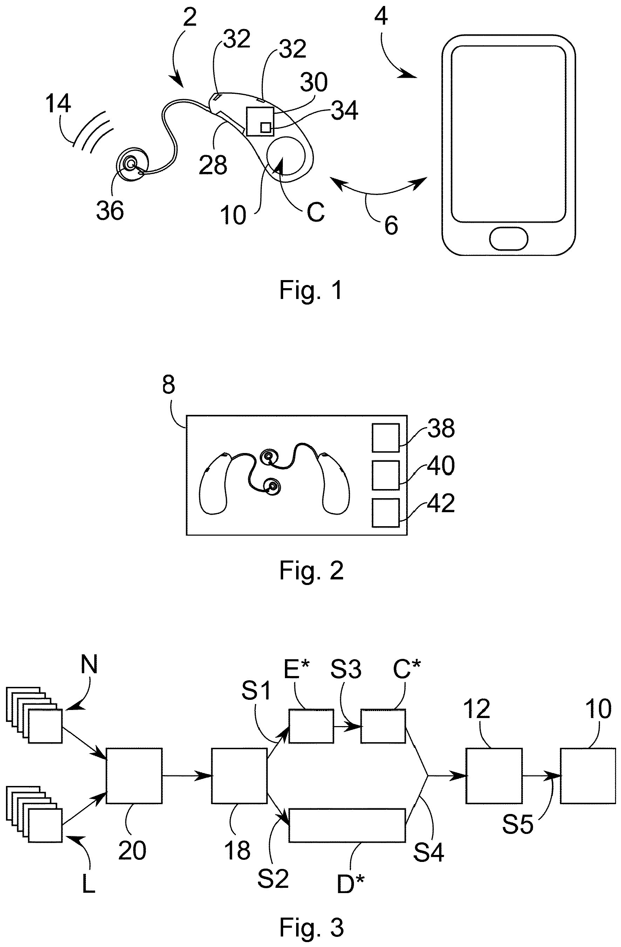

In Fig. 1 ist ein Ausführungsbeispiel für ein mobiles Gerät 2 gezeigt, welches hier ein Hörgerät, speziell ein binaurales Hörgerät ist, die nachfolgenden Ausführungen gelten jedoch sinngemäß auch für andere Ausgestaltungen des Geräts 2. In Fig. 1 ist weiter ein optionales Zusatzgerät 4 gezeigt, hier ein Smartphone, welches über eine Datenverbindung 6 mit dem Gerät 2 verbunden ist. In Fig. 2 ist dann das Gerät 2 aus Fig. 1 mit einem Ladegerät 8 gezeigt, mit welchem das Gerät 2 verbindbar ist, zum Laden eines Energiespeichers 10 des Geräts. Das hier gezeigte Ladegerät 8 ist lediglich beispielhaft als Box ausgebildet, in welche das Gerät 2 zum Verbinden mit dem Ladegerät 8 und zum Laden des Energiespeichers 10 eingelegt wird. In Fig. 1 ist nur eines von zwei Einzelgeräten des binauralen Hörgeräts gezeigt, in Fig. 2 sind beide Einzelgeräte gezeigt.

Nachfolgend wird unter Bezugnahme zu den Figuren Ausführungsbeispiele für ein Verfahren zum Laden des Energiespeichers 10 des mobilen Geräts 2 erläutert. Ein konkretes Ausführungsbeispiel des Verfahrens ist in Fig. 3 gezeigt. Das mobile Gerät 2 ist abwechselnd in Ladephasen L, L* ladbar und in Nutzungsphasen N, N* nutzbar. Nutzungsphasen N, N* und Ladephasen L, L* schließen sich gegenseitig aus und wechseln einander ab. Dies ist schematisch in Fig. 3 gezeigt, welche beispielhaft eine Abfolge von Nutzungs- und Ladephasen N, N*, L, L* zeigt. Während einer jeweiligen Ladephase L, L* wird der Energiespeicher 10 gemäß einem Ladeschema 12 geladen. Am Ende der Ladephase L, L* weist der Energiespeicher 10 eine Ladung auf, welche der Gesamtkapazität des Energiespeichers 10 entspricht (vollständig geladen, d.h. 100% Ladung) oder lediglich einem Teil davon (teilweise geladen, d.h. <100% Ladung).

Während einer jeweiligen Nutzungsphase N, N* wird das mobile Gerät 2 mit Energie aus dem Energiespeicher 10 betrieben und weist dadurch einen Energieverbrauch E auf. Der Energieverbrauch E während einer Nutzungsphase N ist in Fig. 3 jeweils durch einen Doppelpfeil angedeutet. Während der jeweiligen Nutzungsphase N, N* wird das Gerät 2 durchgängig oder mit Unterbrechung genutzt und ist nicht mit einem Ladegerät 8 verbunden. Der Energieverbrauch E, E* während einer jeweiligen Nutzungsphase N, N* ist von dem konkreten Nutzungsverhalten abhängig und variiert entsprechend.

Vorliegend werden für das Laden in einer bevorstehenden Ladephase L* eine voraussichtliche Dauer D* der bevorstehenden Ladephase L* sowie ein voraussichtlicher Energieverbrauch E* einer nachfolgenden Nutzungsphase N* basierend auf vorangegangenen Ladephasen L sowie basierend auf vorangegangenen Nutzungsphasen N bestimmt. Basierend auf dem voraussichtlichen Energieverbrauch E* wird dann eine benötigte Ladung C* für den Energiespeicher 10 berechnet, dies wird auch als "Berechnung der Ladung" bezeichnet. Die benötigte Ladung C* ist diejenige Ladung C, welche benötigt wird, um den voraussichtlichen Energieverbrauch E* während der nachfolgenden Nutzungsphase N* zu gewährleisten. Das Bestimmen des voraussichtlichen Energieverbrauchs E* wird auch als "Prognose des Energieverbrauchs" bezeichnet und ist in Fig. 3 als Schritt S1 gekennzeichnet. Das Bestimmen der voraussichtlichen Dauer D* wird auch als "Prognose der Ladedauer" bezeichnet und ist in Fig. 3 als Schritt S2 gekennzeichnet. Die "Berechnung der Ladung" ist in Fig. 3 als Schritt S3 gekennzeichnet.

Die bevorstehende Ladephase L* ist allgemein diejenige Ladephase, welche als nächstes ansteht. Der voraussichtliche Energieverbrauch E* und die voraussichtliche Dauer D* werden beispielsweise am Beginn der bevorstehenden Ladephase L* bestimmt, z.B. beim Verbinden des mobilen Geräts 2 mit dem Ladegerät 8. Unter "nachfolgender Nutzungsphase" N* wird diejenige Nutzungsphase verstanden, welche sich unmittelbar an die bevorstehende Ladephase L* anschließt. Die Dauer D, D* einer Ladephase L, L* wird auch als Ladedauer oder Lade-Zeitspanne bezeichnet. Auch die Nutzungsphase N* weist eine Dauer auf, welche entsprechend auch als Nutzungs-Zeitspanne oder als Entlade-Zeitspanne bezeichnet wird.

Für die bevorstehende Ladephase L* wird das Ladeschema 12 basierend auf der benötigten Ladung C* und der voraussichtlichen Dauer D* eingestellt. Das Einstellen des Ladeschemas 12 wird auch als "Planung des Ladevorgangs" bezeichnet und ist in Fig. 3 als Schritt S4 gekennzeichnet. Das Ladeschema 12 wird demnach mithilfe eine Prognose (genauer zwei Prognosen, hier die Schritte S1, S2) angepasst, welche aus historischen Daten abgeleitet wird, nämlich aus dem Nutzungs-und Ladeverhalten und somit aus Informationen über vorangegangene Nutzungs-und Ladephasen N, L. Damit wird das Laden des Energiespeichers 10 optimieren, denn die Dauer D* der Ladephase L* und die benötigte Ladung C* sind nun z.B. schon zu Beginn der bevorstehenden Ladephase L* bekannt, sodass das Ladeschema 12 entsprechend zielgerichtet eingestellt wird und ein unnötig schnelles und/oder vollständiges Laden vermieden wird.

Schließlich wird dann der Energiespeicher 10 während der Ladephase L* (d.h. die vormals bevorstehende Ladephase L*) gemäß dem Ladeschema 12 geladen, dies wird auch als "Durchführung des Ladevorgangs" bezeichnet und ist in Fig. 3 als Schritt S5 gekennzeichnet.

Im gezeigten Ausführungsbeispiel wird das Ladeschema 12 für die bevorstehende Ladephase L* derart eingestellt, dass die voraussichtliche Dauer D* zum Erreichen der benötigten Ladung C* maximal genutzt wird. Anstatt den Energiespeicher 10 möglichst schnell zu laden, wird vorliegend eine möglichst geringe Ladegeschwindigkeit gewählt, welche gerade so hoch ist, dass die voraussichtlich zur Verfügung stehende Dauer D* maximal genutzt wird. Das Ladeschema 12 gibt zudem vorliegend einen Ladestrom zum Laden vor und wird derart ausgewählt, dass zum Erreichen der benötigten Ladung C* während der voraussichtlichen Dauer D* der Ladestrom minimiert wird, nämlich so gering wie möglich gewählt wird, jedoch nicht geringer als zum Erreichen der Ladung C* während der Ladedauer D* erforderlich.

Optional wird die benötigte Ladung C* auf einen Maximalwert aufgerundet, welcher wenigstens 85% und höchstens 95% einer Gesamtkapazität des Energiespeichers 10 beträgt, beispielsweise 92%. Weiterhin wird optional ein Hinweis 14 ausgegeben, falls für die benötigte Ladung C* ein Wert oberhalb des genannten Maximalwerts berechnet wird. Um eine mangelnde Energieversorgung E während der nachfolgenden Nutzungsphase N* zu vermeiden, wird dem Nutzer beispielsweise vorgeschlagen, die Ladedauer D über die zuvor bestimmte, voraussichtliche Dauer D* hinaus zu verlängern. Alternativ oder zusätzlich wird dem Nutzer angeboten, während der nachfolgenden Nutzungsphase N* auf eine oder mehrere Funktionen des Geräts 2 zu verzichten oder diese abzuschalten, um den tatsächlichen Energieverbrauch E gegenüber dem zuvor bestimmten, voraussichtlichen Energieverbrauch E* zu reduzieren. Alternativ oder zusätzlich wird dem Nutzer angeboten, den Energiespeicher 10 trotzdem über den Maximalwert hinaus zu laden. Der Hinweis 14 wird in Fig. 1 beispielhaft als akustischer Hinweis vom Gerät 2 an den Nutzer ausgebeben, alternativ oder zusätzlich von dem Ladegerät 8 und/oder von dem Zusatzgerät 4.

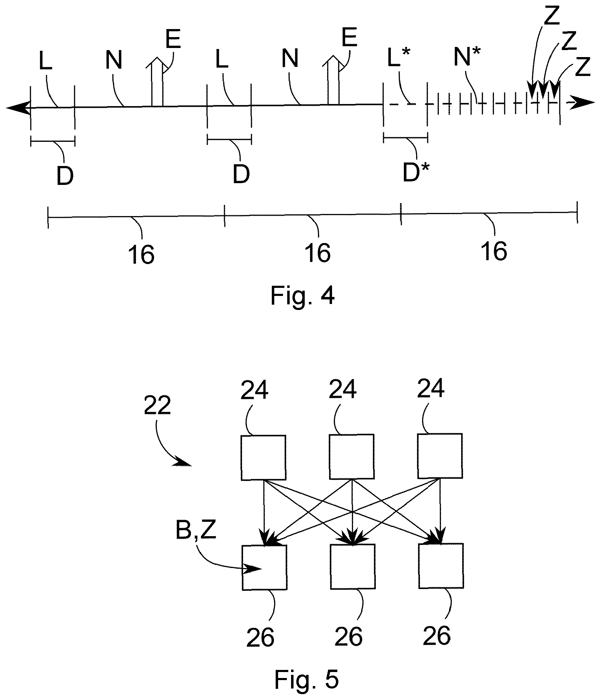

Bei der Bestimmung des voraussichtlichen Energieverbrauchs E* und der voraussichtlichen Dauer D* wird vorliegend ein 24h-Zeitrahmen 16 verwendet. Ein Ausführungsbeispiel hierfür ist in Fig. 4 gezeigt. Darin ist auch die wechselnde Abfolge von Nutzungs- und Ladephasen N, N*, L, L* erkennbar sowie eine bevorstehende Ladephase L* und eine nachfolgende Nutzungsphase N*. Beginn und Ende des 24h-Zeitrahmens 16 fallen nicht notwendigerweise auf 00:00 Uhr. Ein Hörgerät wird typischerweise tagsüber genutzt und nachts geladen, d.h. eine Nutzungsphase N und eine Ladephase L wechseln sich in einem 24h-Rhythmus ab. Innerhalb des 24h-Zeitrahmens 16 beginnt die Nutzungsphase N nicht notwendigerweise immer zu derselben Zeit. Gleiches gilt für das Ende der Nutzungsphase N sowie für Beginn und Ende der Ladephase L. Zahlreiche Variationen sind denkbar, beispielsweise sind in einer nicht explizit gezeigten Variante mehrere Nutzungs- und Ladephasen N, L innerhalb eines einzelnen 24h-Zeitrahmens 16 vorhanden, insofern zeigt Fig. 1 lediglich eine einzelne von einer Vielzahl an möglichen Ausgestaltungen.

Der voraussichtliche Energieverbrauch E* und die voraussichtliche Dauer D* werden im gezeigten Ausführungsbeispiel mittels einer Lernmaschine 18 bestimmt, welche mit den vorangegangenen Nutzungs- und Ladephasen N, L trainiert ist. Der Lernmaschine 18 werden Trainingsinformationen 20 aus den vorangegangenen Nutzungsphasen N und den vorangegangenen Ladephasen L zugeführt. Aus den Trainingsinformationen 20 leitet die Lernmaschine 18 dann Informationen über die bevorstehende Ladephase L* und die nachfolgende Nutzungsphase N* ab, z.B. direkt die Dauer D* und den voraussichtlichen Energieverbrauch E*. Die Trainingsinformationen 20 sind beispielsweise die jeweilige Dauer D der vorangegangenen Ladephasen L und der jeweilige Energieverbrauch E der vorangegangenen Nutzungsphasen N oder demgegenüber detaillierter und umfassen Informationen, aus welchen die Ladedauer D* und der voraussichtliche Energieverbrauch E* ableitbar sind. Beispielsweise umfassen die Trainingsinformationen 20 Beginn und Ende einer jeweiligen Ladephase L oder Nutzungsphase N, Angaben darüber, zu welchem Zeitpunkt das Gerät 2 aktiv ist oder geladen wird, zu welchem Zeitpunkt sich das Gerät 2 in welchem Betriebszustand B befindet oder zu welchem Zeitpunkt das Gerät 2 wieviel Energie verbraucht.

Der Betriebszustand B ist beispielsweise ein Audio-Streaming Modus, ein Headset-Modus, ein Fitness-Tracking Modus, ein Health-Monitoring Modus oder ein Standardmodus. Die Betriebszustände B sind typischerweise durch einen unterschiedlichen Energieverbrauch E charakterisiert, welcher vor allem davon abhängt, welche Komponenten des mobilen Geräts 2 für den jeweiligen Betriebszustand B aktiv sind. Während einer jeweiligen Nutzungsphase N wechseln sich typischerweise mehrere verschiedene Betriebszustände B ab, wobei ein jeweiliger Betriebszustand B auch mehrmals aktiv sein kann. Vorliegend lernt die Lernmaschine 18, zu welchem Zeitpunkt welcher Betriebszustand B aktiv ist und zu welchem Zeitpunkt das mobile Gerät 2 geladen wird und prognostiziert damit den voraussichtlichen Energieverbrauch E* und die voraussichtliche Dauer D*.

Die Lernmaschine 18 wird entweder als Teil des Verfahrens trainiert oder separat davon. Die Lernmaschine 18 überwacht in einem Training den Betriebszustand B des mobilen Geräts 2 und erhebt und speichert dabei die oben genannten Trainingsinformationen 20. Sobald eine hinreichende Menge an Trainingsinformationen 20 erhoben wurde und die Lernmaschine 18 damit trainiert wurde, ist diese dann zur Prognose bereit. Beispielweise wird die Anzahl an Lade-/Entladezyklen gezählt, und ab einer bestimmten Anzahl von Lade-/Entladezyklen wird davon ausgegangen, dass eine hinreichende Menge an Trainingsinformationen 20 vorhanden ist und die Lernmaschine 18 dann damit trainiert.

Die Lernmaschine 18 ist beispielsweise mit einem Computerprogramm realisiert, welches auf einem entsprechenden Computer ausgeführt wird, beispielsweise auf dem mobilen Gerät 2 selbst, auf dem Ladegerät 8, auf einem Server oder auf einem Zusatzgerät 4 oder auf mehrere davon verteilt.

Im hier gezeigten Ausführungsbeispiel weist die Lernmaschine 18 ein Bayessches Netz 22 auf, z.B. wie lediglich ausschnittsweise in Fig. 5 gezeigt, mit mehreren Elternknoten 24 (d.h. "parent nodes"), welche jeweils ein kalendarisches Merkmal, ein Ortsmerkmal oder ein Umgebungsmerkmal repräsentieren, und mit mehreren Kindknoten 26 (d.h. "child nodes"), welche jeweils ein Zeitintervall Z repräsentieren, während welchem ein bestimmter Betriebszustand B aktiv ist. Kalendarische Merkmale, Ortsmerkmale und Umgebungsmerkmale werden allgemein auch jeweils als Merkmale bezeichnet, sodass jeder Elternknoten 24 allgemein ein Merkmal repräsentiert. Beispielsweise ergeben sich Elternknoten 24, welche wie folgt Merkmale mit möglichen Werten repräsentieren: Wochentag {Mo, Di, Mi, Do, Fr, Sa, So}, Dienstreise-Tag {ja, nein}, Urlaubstag {ja, nein}, Festtag {Heiligabend, Silvester, Karfreitag, Ostersonntag, Ostermontag; ...}, Ort {Zuhause, Büro, Fitnesscenter, ...}, Umgebung {drinnen, draußen}.

Die Kindknoten 26 repräsentieren jeweils ein Zeitintervall Z eines Betriebszustands B. Bei einer Anzahl A an Zeitintervallen Z und einer Anzahl B an Betriebszuständen B ergeben sich entsprechend A*B Kindknoten 26. Bei Verwendung eines 24h-Zeitrahmens 16 oder allgemein eines beliebigen Zeitrahmens wird dieser in mehrere Zeitintervalle Z aufgeteilt, z.B. in aufeinanderfolgende Zeitintervalle Z von z.B. je 5 min Länge. Der Zeitrahmen und die Länge sind jedoch grundsätzlich variabel. Die Zeitintervalle Z weisen vorliegend die gleiche Länge auf, dies aber nicht zwingend. Beispielhafte Betriebszustände B wurden weiter oben bereits genannt. Beispielsweise ergeben sich für den Betriebszustand B "Fitness-Tracking Modus" dann mehrere Kindknoten 26 wie folgt: (..., Fitness-Tracking Modus 15:00-15:05 Uhr, Fitness-Tracking Modus 15:05-15:10 Uhr, Fitness-Tracking Modus 15:10-15:15 Uhr, ...). Weitere Kindknoten 26 ergeben sich analog für andere Betriebszustände B. In Fig. 5 repräsentiert jeder Kindknoten 26 eine andere Kombination eines Betriebszustands B und eines Zeitintervalls Z.

Jedem Knoten 24, 26 ist zudem eine Wahrscheinlichkeitstabelle (d.h. "conditional probability table") zugeordnet, jeweils mit einer Anzahl von bedingten Wahrscheinlichkeiten, kurz auch lediglich als "Wahrscheinlichkeiten" bezeichnet. Diese Wahrscheinlichkeiten geben an, wie wahrscheinlich das jeweilige Merkmal auftritt oder nicht, d.h. erfüllt ist oder nicht. Speziell bei den Kindknoten 26 sind diese Wahrscheinlichkeiten abhängig von den Wahrscheinlichkeiten in den Wahrscheinlichkeitstabellen der Elternknoten 24, die mit dem jeweiligen Kindknoten 26 verknüpft sind. Die Wahrscheinlichkeiten werden im Rahmen des Trainings der Lernmaschine 18 basierend auf den vorangegangenen Nutzungs- und/oder Ladephasen N, L erzeugt, sodass dann mit der trainierten Lernmaschine 18 die Wahrscheinlichkeit eines jeweiligen Betriebszustands B für ein jeweiliges Zeitintervall Z prognostiziert wird. Zum einen wird dabei die voraussichtliche Dauer D*. Zum anderen wird der voraussichtliche Energieverbrauch E* bestimmt.

In einer beispielhaften Umsetzung des oben beschriebenen Vorgehens wird der voraussichtliche Energieverbrauch E* bestimmt, indem die nachfolgende Nutzungsphase N* wie in Fig. 3 angedeutet in mehrere Zeitintervalle Z unterteilt wird und indem basierend auf den vorangegangenen Nutzungsphasen N* für jedes der Zeitintervalle Z ein Intervall-Energieverbrauch bestimmt wird, welcher ein Erwartungswert für den voraussichtlichen Energieverbrauch E* des Geräts 2 während dieses Zeitintervalls Z ist. Ein jeweiliger Intervall-Energieverbrauch wird z.B. als Summe von gewichteten Einzel-Energieverbräuchen bestimmt, wobei die gewichteten Einzel-Energieverbräuche dadurch bestimmt werden, dass für jedes Zeitintervall Z ein Einzel-Energieverbrauch eines jeweiligen Betriebszustands B mit der Wahrscheinlichkeit gewichtet wird, welche angibt, wie wahrscheinlich der jeweilige Betriebszustand B während des Zeitintervalls Z aktiv ist. Somit ergibt sich für jedes Zeitintervall Z eine Anzahl an gewichteten Einzel-Energieverbräuchen, welche dann zum Intervall-Energieverbrauch summiert werden. Der voraussichtliche Energieverbrauch E* während der nachfolgenden Nutzungsphase N* insgesamt wird dann bestimmt, indem wiederum die Intervall-Energieverbräuche summiert werden. Optional wird zusätzlich zu den Intervall-Energieverbräuchen noch ein Sicherheitsaufschlag hinzuaddiert, z.B. 20% der Summe Intervall-Energieverbräuche.

Somit wird für die nachfolgende Nutzungsphase N* prognostiziert, mit welcher Wahrscheinlichkeit und wie lange die einzelnen Betriebszustände B während der nachfolgenden Nutzungsphase N* auftreten. Da für jeden Betriebszustand B dessen Energiebedarf E bekannt ist, wird damit auch der voraussichtliche Energieverbrauch E* bestimmt. Die Prognose des voraussichtlichen Energieverbrauchs E* basiert dabei auf dem zuvor durchgeführten Training. Die nachfolgende Nutzungsphase N* wird nun zuerst in mehrere Zeitintervalle Z unterteilt, welche vorliegend den Zeitintervallen Z entsprechen, welche durch die Kindknoten 26 abgebildet werden. Für jedes der Zeitintervalle Z wird nun der Intervall-Energieverbrauch während des jeweiligen Zeitintervalls Z bestimmt, indem für jedes Zeitintervall Z der Einzel-Energieverbrauch eines jeweiligen Betriebszustands B mit derjenigen Wahrscheinlichkeit gewichtet, welche angibt, wie wahrscheinlich der jeweilige Betriebszustand B während des entsprechenden Zeitintervalls Z aktiv ist, sodass sich für jedes Zeitintervall Z eine Anzahl an gewichteten Einzel-Energieverbräuchen ergibt, nämlich ein gewichteter Einzel-Energieverbrauch für jeden Betriebszustand B. Die Wahrscheinlichkeiten werden den oben genannten Wahrscheinlichkeitstabellen entnommen. Die gewichteten Einzel-Energieverbräuche werden dann zu dem Intervall-Energieverbrauch summiert und zwar für jedes Zeitintervall Z der nachfolgenden Nutzungsphase N*, sodass sich mehrere Intervall-Energieverbräuche ergeben, welche jeweils ein Erwartungswert für den voraussichtlichen Energieverbrauch während des jeweiligen Zeitintervalls Z darstellen. Diese Erwartungswerte werden dann ebenfalls summiert, um den voraussichtlichen Energieverbrauch E* während der nachfolgenden Nutzungsphase N* zu bestimmen.

Die voraussichtliche Dauer D* wird beispielsweise basierend auf den Dauern D der vorangegangenen Ladephasen L bestimmt. Im Grunde wird somit ein Ladeverhalten des Nutzers überwacht, d.h. es wird überwacht wann und/oder wie lange das Gerät 2 zum Laden mit einem Ladegerät 8 verbunden wird.

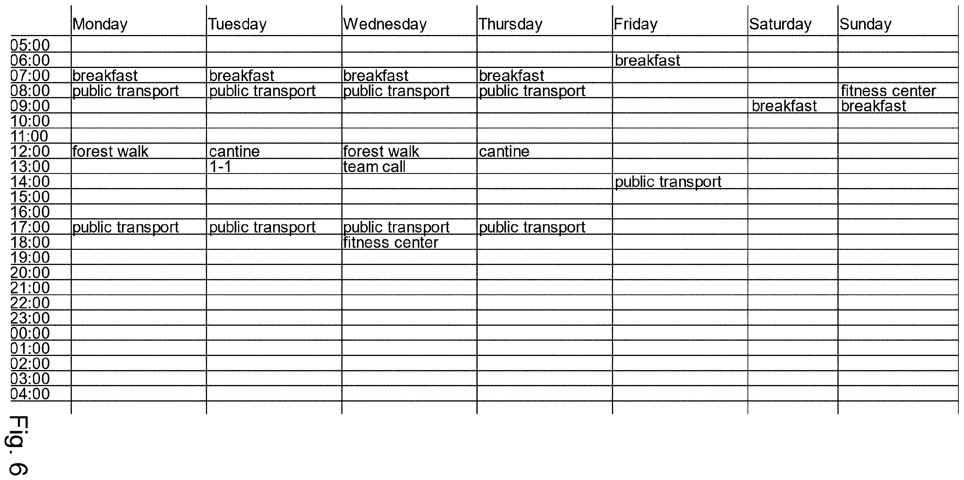

Durch die Berücksichtigung diverser Merkmale wie weiter oben beschrieben, lässt sich auch ein vergleichsweise komplexes Nutzungs- und Ladeverhalten für eine Prognose nutzen. Dabei wird unter "komplex" insbesondere verstanden, dass das Nutzungs- und Ladeverhalten nicht lediglich dem gewählten Zeitrahmen folgt, z.B. einem 24h-Rhythmus, sondern z.B., dass sich eine Nutzung des mobilen Geräts 2 an Werktagen (Montag bis Freitag) von einer Nutzung am Wochenende (Samstag, Sonntag) unterscheidet. Auch werden z.B. bestimmte regelmäßige Aktivitäten des Nutzers an bestimmten Wochentagen oder Tagen des Monats oder des Jahres oder mit gleichmäßigem Abstand zueinander berücksichtigt, z.B. ein wöchentliches Meeting oder ein Besuch eines Fitnessstudios alle zwei Tage. Ein Beispiel für eine Muster verschiedener Aktivitäten im Verlauf einer Woche ist in Fig. 6 gezeigt. Dabei ist in der ersten Spalte die Tageszeit angegeben und in den nachfolgenden Spalten sind für jeden Wochentag verschiedene Aktivitäten angegeben, während welchen entsprechende Betriebszustände B des Geräts 2 aktiv sind. Im Falle eines "1-1" oder "team call" z.B. der Headset-Modus und im Falle von "fitness center" der Fitness-Tracking Modus.

Abseits einer Verwendung zur Optimierung des Ladeschemas 12 beim Laden des Energiespeichers 10 lassen sich die Informationen zum Nutzungs- und Ladeverhalten auch gewinnbringend für den Betrieb des mobilen Geräts 2 nutzen, z.B. zur Festlegung einer Eingabe (insbesondere Betriebsparameter) für eine Sensormessung mit einem Sensor 28, welcher hier im Gerät 2 untergebracht ist. Entsprechend werden in optionalen Ausgestaltung der voraussichtliche Energiebedarf E* und/oder die voraussichtliche Dauer D* zur Festlegung einer Eingabe für eine Sensormessung verwendet.

Das hier gezeigte mobile Gerät 2 ist ausgebildet zur Verwendung in einem Verfahren wie vorstehend beschrieben und weist hierzu eine Steuereinheit 30 auf. Wie bereits angedeutet, ist das hier gezeigte Gerät 2 ein Hörgerät. Das Hörgerät ist vorliegend zur Versorgung eines Nutzers ausgebildet, welcher/welche ein Hördefizit aufweist. Hierzu weist das Hörgerät ein Mikrofon 32 auf, welches Schall aus der Umgebung aufnimmt und ein elektrisches Eingangssignal erzeugt. Dieses wird zur Modifikation einer Signalverarbeitung 34 des Hörgeräts zugeführt. Die Modifikation erfolgt anhand eines individuellen Audiogramms des Nutzers, sodass ein individuelles Hördefizit des Nutzers ausgeglichen wird. Die Signalverarbeitung 34 gibt als Ergebnis ein elektrisches Ausgangssignal aus, welches dann über einen Hörer 36 wieder in Schall umgewandelt wird und an den Nutzer ausgegeben wird. Je nach Hörgerätetyp sind anstelle des Mikrofons 32 auch andere Eingangswandler möglich, analog sind anstelle des Hörers 36 je nach Hörgerätetyp auch andere Ausgangswandler möglich.

Analog ist ein vorteilhaftes Ladegerät 8 ausgebildet zum Laden eines mobilen Geräts 2 wie vorstehend beschrieben nach einem Verfahren wie vorstehend beschrieben. Hierzu weist das Ladegerät 8 eine Steuereinheit 38 auf, welche ausgebildet ist, das Verfahren durchzuführen und dadurch das mobile Gerät 2, genauer dessen Energiespeicher 10 zu laden. Das hier beispielhaft gezeigte Ladegerät ist zudem ein mobiles Ladegerät und weist somit selbst eine Sekundärzelle 40 als Energiespeicher auf, aus welchem das mobile Gerät 2 ladbar ist. Zusätzlich weist das Ladegerät 8 noch eine optionale Brennstoffzelle 42 als einen Zusatz-Energiespeicher auf, um die Sekundärzelle 40 zu laden. Das beschriebene Verfahren wird dann zusätzlich dazu verwendet, um die Sekundärzelle 40 aus der Brennstoffzelle 42 möglichst optimal zu laden. Neben der benötigten Ladung C* für das mobile Gerät 2 wird dann auch eine Ladung für die Sekundärzelle 40 basierend auf den vorangegangenen Nutzungsphasen und/oder Ladephasen N, L berechnet.

In einer nicht explizit gezeigten Ausgestaltung wird das Verfahren auf einem Server ausgeführt, z.B. als Cloud-Service. Der Server ist über eine Datenverbindung, z.B. Internet, mit dem Ladegerät 8 und/oder dem mobilen Gerät 2 verbunden. Die beschriebenen Durchführungen des Verfahrens auf dem mobilen Gerät 2, dem Ladegerät 8 oder dem Server sind auch vorteilhaft kombinierbar, z.B. derart, dass die Schritte des Verfahrens auf zwei oder mehrere dieser Geräte verteilt sind.

### Bezugszeichenliste

- 2: mobiles Gerät
- 4: Zusatzgerät
- 6: Datenverbindung
- 8: Ladegerät
- 10: Energiespeicher
- 12: Ladeschema
- 14: Hinweis
- 16: 24h-Zeitrahmen
- 18: Lernmaschine
- 20: Trainingsinformationen
- 22: Bayessches Netz
- 24: Elternknoten
- 26: Kindknoten
- 28: Sensor
- 30: Steuereinheit (des mobilen Geräts)
- 32: Mikrofon
- 34: Signalverarbeitung
- 36: Hörer
- 38: Steuereinheit (des Ladegeräts)
- 40: Sekundärzelle
- 42: Brennstoffzelle
- B: Betriebszustand
- C: Ladung
- C*: benötigte Ladung
- D: Dauer (einer vorangegangenen Ladephase)
- D*: voraussichtliche Dauer (der bevorstehenden Ladephase)
- E: Energieverbrauch
- E*: voraussichtlicher Energieverbrauch
- L: vorangegangene Ladephase
- L*: bevorstehende Ladephase
- N: vorangegangene Nutzungsphase
- N*: nachfolgende Nutzungsphase
- S1: Schritt (Prognose des Energieverbrauchs)
- S2: Schritt (Prognose der Ladedauer)
- S3: Schritt (Berechnung der Ladung)
- S4: Schritt (Planung des Ladevorgangs)
- S5: Schritt (Durchführung des Ladevorgangs)
- Z: Zeitintervall

## Patentansprüche

1. Verfahren zum Laden eines Energiespeichers (10) eines mobilen Geräts (2), insbesondere eines Hörgeräts, welches abwechselnd in Ladephasen (L, L*) ladbar und in Nutzungsphasen (N, N*) nutzbar ist,
- wobei für das Laden in einer bevorstehenden Ladephase (L*) eine voraussichtliche Dauer (D*) der bevorstehenden Ladephase (L*) sowie ein voraussichtlicher Energieverbrauch (E*) einer nachfolgenden Nutzungsphase (N*) basierend auf vorangegangenen Ladephasen (L) und vorangegangenen Nutzungsphasen (N) bestimmt werden,
- wobei basierend auf dem voraussichtlichen Energieverbrauch (E*) eine benötigte Ladung (C*) für den Energiespeicher (10) berechnet wird,
- wobei für die bevorstehende Ladephase (L*) ein Ladeschema (12) zum Laden des Energiespeichers (10) basierend auf der benötigten Ladung (C*) und der voraussichtlichen Dauer (D*) eingestellt wird.

2. Verfahren nach Anspruch 1,
wobei das Ladeschema (12) für die bevorstehende Ladephase (L*) derart eingestellt wird, dass die voraussichtliche Dauer (D*) der bevorstehenden Ladephase (L*) zum Erreichen der benötigten Ladung (C*) maximal genutzt wird.

3. Verfahren nach einem der Ansprüche 1 oder 2,
wobei das Ladeschema (12) einen Ladestrom vorgibt und derart ausgewählt wird, dass zum Erreichen der benötigten Ladung (C*) während der voraussichtlichen Dauer (D*) der bevorstehenden Ladephase (L*) der Ladestrom minimiert wird.

4. Verfahren nach einem der Ansprüche 1 bis 3,
wobei die benötigte Ladung (C*) auf einen Maximalwert aufgerundet wird, welcher wenigstens 65%, bevorzugt wenigstens 85%, und höchstens 95% einer Gesamtkapazität des Energiespeichers (10) beträgt.

5. Verfahren nach einem der Ansprüche 1 bis 4,
wobei, falls für die benötigte Ladung (C*) ein Wert oberhalb eines Maximalwerts berechnet wird, ein Hinweis (14) ausgegeben wird.

6. Verfahren nach einem der Ansprüche 1 bis 5,
wobei bei der Bestimmung des voraussichtlichen Energieverbrauchs (E*) und der voraussichtlichen Dauer (D*) der bevorstehenden Ladephase (L*) ein 24h-Zeitrahmen (16) verwendet wird.

7. Verfahren nach einem der Ansprüche 1 bis 6,
wobei der voraussichtliche Energieverbrauch (E*) und die voraussichtliche Dauer (D*) der bevorstehenden Ladephase (L*) mittels einer Lernmaschine (18) bestimmt werden, welche mit den vorangegangenen Nutzungsphasen (N) und mit den vorangegangenen Ladephasen (L) trainiert ist.

8. Verfahren nach Anspruch 7,
wobei die Lernmaschine (18) ein Bayessches Netz (22) aufweist, mit mehreren Elternknoten (24), welche jeweils ein kalendarisches Merkmal, ein Ortsmerkmal oder ein Umgebungsmerkmal repräsentieren, und mit mehreren Kindknoten (26), welche jeweils ein Zeitintervall (Z) repräsentieren, während welchem ein bestimmter Betriebszustand (B) aktiv ist.

9. Verfahren nach einem der Ansprüche 1 bis 8,
wobei der voraussichtliche Energieverbrauch (E*) bestimmt wird, indem die nachfolgende Nutzungsphase (N*) in mehrere Zeitintervalle (Z) unterteilt wird und indem basierend auf den vorangegangenen Nutzungsphasen (N)
a. für jedes der Zeitintervalle (Z) ein Intervall-Energieverbrauch bestimmt wird, welcher ein Erwartungswert für den voraussichtlichen Energieverbrauch des mobilen Geräts (2) während dieses Zeitintervalls (Z) ist,
b. die Intervall-Energieverbräuche summiert werden.

10. Verfahren nach einem der Ansprüche 1 bis 9,
wobei die voraussichtliche Dauer (D*) der bevorstehenden Ladephase (L) basierend auf den Dauern (D) der vorangegangenen Ladephasen (L) bestimmt wird.

11. Verfahren nach einem der Ansprüche 1 bis 10,
wobei der voraussichtliche Energiebedarf (E*) und/oder die voraussichtliche Dauer (D*) zur Festlegung einer Eingabe für eine Sensormessung verwendet werden.

12. Mobiles Gerät (2), insbesondere Hörgerät, welches ausgebildet ist zur Verwendung in einem Verfahren nach einem der Ansprüche 1 bis 10.

13. Ladegerät (8), welches ausgebildet ist zum Laden eines Energiespeichers (10) eines mobilen Geräts (2) nach einem Verfahren gemäß einem der Ansprüche 1 bis 10.

14. Ladegerät (8) nach Anspruch 13,
wobei dieses eine Sekundärzelle (40) als Energiespeicher aufweist, aus welchem das mobile Gerät (2) ladbar ist, und zusätzlich einen Zusatzenergiespeicher (42), insbesondere eine Brennstoffzelle, um die Sekundärzelle (40) zu laden.
